# EUROPEAN PATENT SPECIFICATION

(11) **EP 0 382 212 B1**
(45) Date of publication and mention of the grant of the patent: **15.07.1998**
(21) Application number: 90102487.7
(22) Date of filing: 08.02.1990
(51) Int. Cl.: H04Q 3/00, H04M 3/42, H04M 11/00, H04N 1/32

(54) **Multi-media information service center**
Medienverbund-Nachrichtendienstleistungszentrum
Centre de service d'information multimédia

(30) Priority: 09.02.1989 JP 30577/89
(43) Date of publication of application: 16.08.1990
(73) Proprietor: FUJITSU LIMITED, Kawasaki-shi, Kanagawa 211 (JP)
(72) Inventor: Kino, Tooru, Kunitachi-shi, Tokyo 186 (JP)
(74) Representative: Lehn, Werner, Dipl.-Ing.

(56) References cited:
- JAPAN TELECOMMUNICATION REVIEW. vol. 29, no. 1, January 1987, TOKYO JP pages 29 - 36; TETSUYA ISAYAMA: 'AUTOMATIC RESPONCE PROCESSING EQUIPMENT AS A MULTI- MEDIA COMMUNICATION NODE'
- PATENT ABSTRACTS OF JAPAN vol. 10, no. 99 (E-396)16 April 1986 JP-A-60 241 367

## Description

The present invention generally relates to multi-media information service centers and multi-media communication systems, and more particularly to a multi-media information service center and a multi-media communication system which provides multi-media services such as voice mail and facsimile mail services using the same line.

More especially, the invention relates to a multi-media information service center for coupling to a telephone set and a communication unit via a line network, said communication unit being other than a telephone set, said multi-media information service center comprising line connection means for coupling to the line network for connecting the multi-media information service center to the line network in response to a call which is received from a party which is coupled via the line network to the multi-media information service center, storage means for storing a voice information, voice information transmission means for coupling to the line network, said line connection means and said storage means being for reading the voice information from said storage means and transmitting the voice information to the predetermined line, discrimination means for coupling to the line network for discriminating a communication mode of the party, and service providing means for coupling to the line network and said discrimination means for providing to the party a service which is dependent on a discrimination result in said discrimination means. Such a multi-media information service center is disclosed in Japan Telecommunications Review, vol. 19, no. 1, January 1987, pages 29 to 36.

Presently, as services utilizing telephones and facsimile machines, there are voice mail service, facsimile mail service, voice information distribution service, facsimile information distribution service and the like. These services have a common feature. That is, a man-machine interface (MMI) between a user and a service distribution center makes the necessary information transmission and reception by sending a voice guidance from the service distribution center and receiving a push button signal or the like which is input from the user in response to the voice guidance.

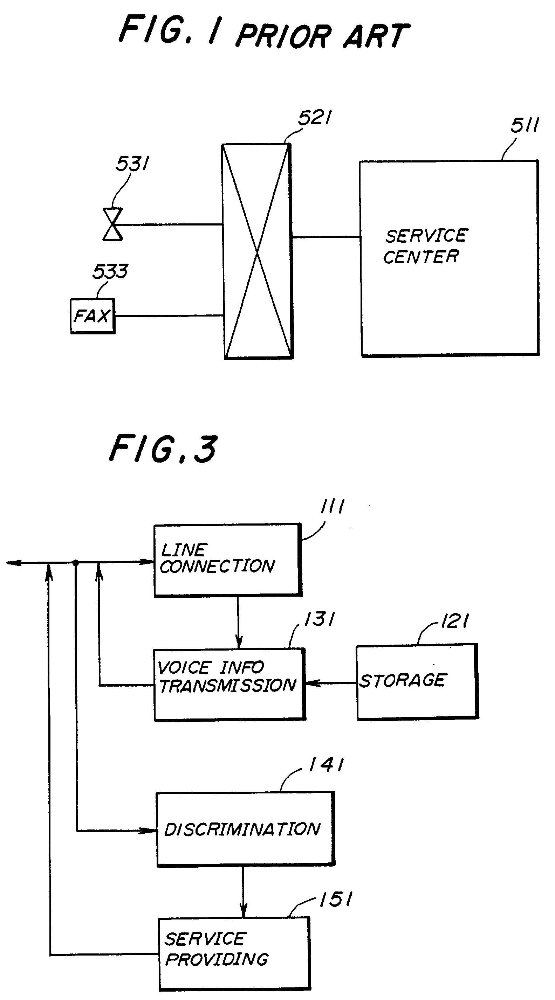

FIG.1 generally shows an example of a conventional multi-media communication system which provides the various services described above. The multi-media communication system comprises a multi-media information service center (hereinafter simply referred to as a center) 511 for providing the various services, a public telephone network 521, a telephone set 531 which is used by a user, and a facsimile machine 533 which is used by a user.

Conventionally, the center 511 generates a voice guidance in the following manner. That is, digitally coded voice data are prestored on a hard disk of a disk drive unit within the center 511, and the voice data required for making the MMI with the user are read out from the hard disk when needed. The voice data are output on a line as the voice guidance.

When providing the voice mail and facsimile mail services on the same line, the center 511 discriminates by hardware after a call is connected whether the mode is an automatic transmission/reception mode or a manual mode. The center 511 outputs the voice guidance after recognizing the manual mode.

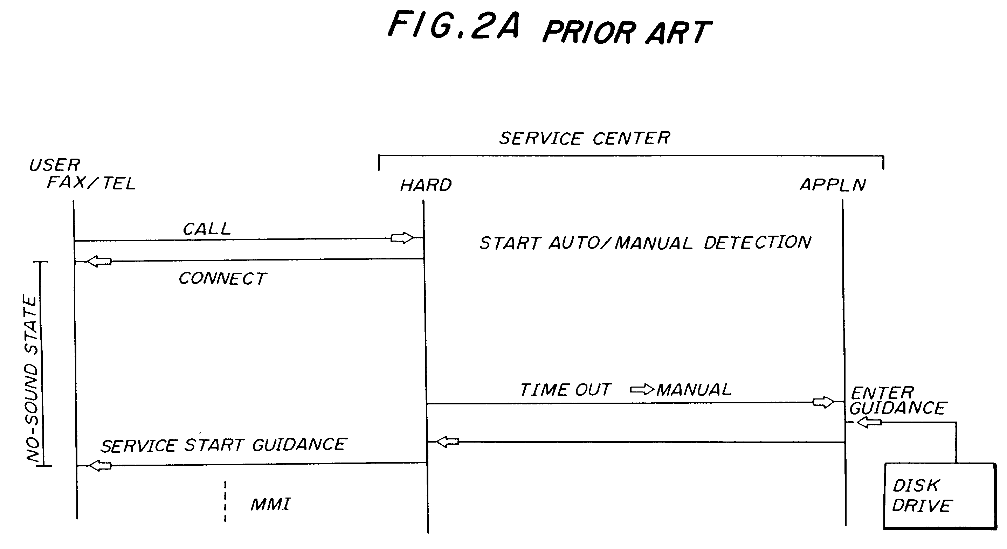

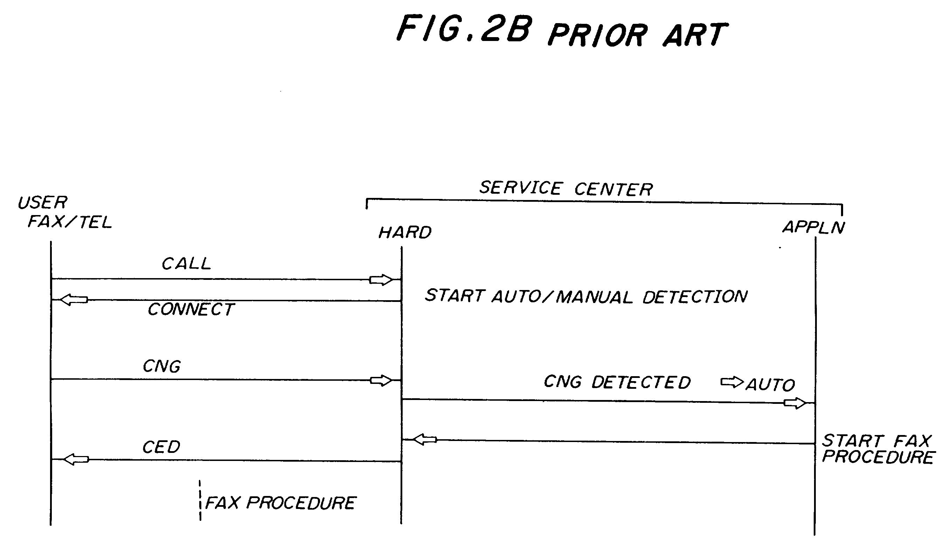

Next, a description will be given of an operation procedure of the center 511 when providing both the voice mail and facsimile mail services using the same line. FIG.2A shows the operation of the center 511 when responding to a call from the telephone set 531, and FIG.2B shows the operation of the center 511 when responding to a call from the facsimile machine 533. In FIGS.2A and 2B, "USER FAX/TEL" indicates the user's facsimile machine 533 or the telephone set 531, "HARD" indicates to a hardware processing of the center 511, and "APPLN" indicates a software processing of the center 511.

When responding to the call from the telephone set 531, the hardware within the center 511 accepts the call and connects the line. When a calling signal in conformance with the standard facsimile procedure is not received from the telephone set 531 within a predetermined time, the application software of the center 511 discriminates that the caller is a telephone set and starts to output the voice guidance. In other words, the disk drive unit of the center 511 reads out the voice data from the hard disk and output on the line. Thereafter, the operator of the telephone set 531 makes an operation depending on the received voice guidance so as to receive the desired service.

On the other hand, when responding to the call from the facsimile machine 533, the hardware within the center 511 accepts the call and connects the line. In this case, the calling signal is received within the predetermined time, and the application software of the center 511 discriminates that the caller is a facsimile machine. Hence, the center 511 thereafter starts the facsimile procedure.

But according to the conventional multi-media communication system, the line connection between the user and the center 511 is detected by the hardware within the center 511 and the application software is informed of the detection result. Then, the application software reads out the digitally coded voice data from the hard disk by controlling the disk drive unit and the voice guidance is output on the line. Due to the time which is needed to make the above described detection and read out of the digitally coded voice data, there is an inevitable time delay from the time when the line between the caller and the center 511 is connected and the time when the caller receives the voice guidance from the center 511.

In addition, when a plurality of services are provided on the same line such as the case shown in FIGS.2A and 2B, there is a need to discriminate whether the caller is the operator of the telephone set 531 or the facsimile machine 533. Due to the time (for example, three seconds) which is needed to make the above described discrimination, there is an inevitable time delay from the time when the line between the caller and the center 511 is connected and the time when the caller receives the voice guidance from the center 511.

Therefore, there is an inevitable time delay from the time when the line between the caller and the center 511 is connected and the time when the caller receives the voice guidance from the center 511, because of the time which is needed to read out the digitally coded voice data from the hard disk and/or the time which is needed to discriminate the caller. The caller receives no sound during a time which corresponds to the inevitable time delay. For this reason, there is a problem in that the caller must wait for the voice message from the center 511 after the line connection is made. Especially when the caller is the telephone set 531, the operator of the telephone set 531 may misunderstand and think that a wrong connection is made when the no-sound state lasts for a relatively long time. Such a misunderstanding may lead to the operator disconnecting the line even though the line connection is correct.

Accordingly, it is a general object of the present invention to provide a novel and useful multi-media information service center and a multi-media communication system in which the problems described above are eliminated.

According to the invention, there is provided a multi-media information service center for coupling to a telephone set and a communication unit via a line network, said communication unit being other than a telephone set, said multi-media information service center comprising line connection means for coupling to the line network for connecting the multi-media information service center to the line network in response to a call which is received from a party which is coupled via the line network to the multi-media information service center, storage means for storing a voice information, voice information transmission means for coupling to the line network, said line connection means and said storage means being for reading the voice information from said storage means and transmitting the voice information to the predetermined line, discrimination means for coupling to the line network for discriminating a communication mode of the party, and service providing means for coupling to the line network and said discrimination means for providing to the party a service which is dependent on a discrimination result in said discrimination means, characterized in that said line connection means has a single line input for receiving calls on a common predetermined line both from said telephone set and from said communication unit, said voice information transmission means and said discrimination means are arranged to operate simultaneously after said line connection means connects the multi-media information service center to the predetermined line in use of said multi-media information centre, said storage means comprises a first storage means for storing a voice guidance and a second storage means of faster access speed than said first storage means for storing a service start guidance, and said voice information transmission means is arranged (i) to read the stored service start guidance from the second storage means simultaneously with the start of discrimination by said discrimination means and to transmit said service start guidance on said predetermined line, (ii) to read the stored voice guidance from the first storage means and to transmit said voice guidance on said predetermined line in succession to said service start guidance, when said discrimination means discriminates the communication mode of the party as a manual calling mode in which a manual call is made from the party which is the telephone set, (iii) to terminate the service start guidance when the discrimination means detects a calling signal from said communication unit and (iv) to accordingly supply a called station identification signal to said communication unit to initiate communication thereof with said multi-media information centre.

In embodiments of the present invention, it is possible to transmit the voice information to the telephone set immediately after the line is connected, thereby preventing a no-sound state from being generated after the line is connected.

The invention will be better understood by referring, by way of example, to the accompanying drawings, wherein:-
FIG.1 is a system block diagram generally showing an example of a conventional multi-media communication system;
FIGS.2A and 2B are time charts for explaining an operation procedure of a multi-media information service center shown in FIG.1;
FIG.3 is a system block diagram generally showing a multi-media communication system according to the present invention for explaining an operating principle thereof;
FIG.4 is a system block diagram showing an embodiment of the multi-media communication system according to the present invention;
FIGS.5 and 6 are time charts for explaining an operation of the embodiment shown in FIG.4; and
FIG.7 is a flow chart for explaining an operation of a controller shown in FIG.4.

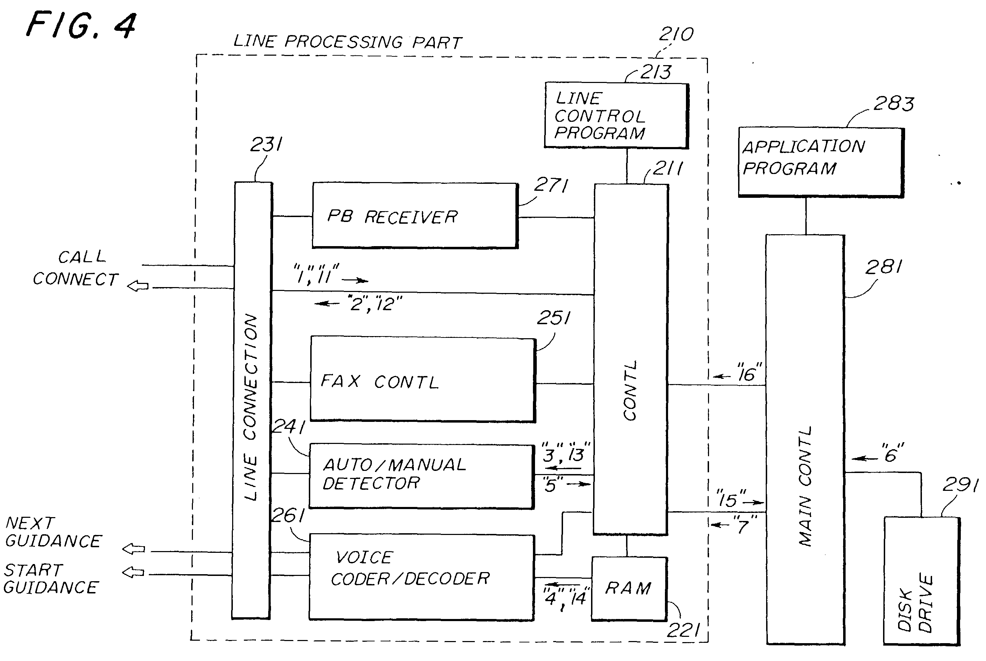

First, a description will be given of the operating principle of the multi-media communication system according to the present invention, by referring to FIG.3. The multi-media communication system generally comprises a line connection means 111, a storage means 121, a voice information transmission means 131, a discrimination means 141, and a service providing means 151.

The line connection means 111 makes a line connection process. The storage means 121 stores voice information, and the stored voice information can be read out from the storage means 121 at a high speed. The voice information transmission means 131 reads out the voice data from the storage means 121 and transmits the voice data on a line which is connected by the line connection means 111. The discrimination means 141 discriminates the communication mode with respect to the party who is connected to the other end of the line. The service providing means 151 provides a service which is dependent on the discrimination result obtained in the discrimination means 141, and this service is provided to the party who is connected to the other end of the line. After the line is connected by the line connection means 111, the transmission of the voice information by the voice information transmission means 131 and the discrimination of the communication mode made in the discrimination means 141 are carried out in parallel, that is, simultaneously.

When the line is connected by the line connection means 111, the voice information transmission means 131 reads out the voice information from the storage means 121 and transmits the voice information on the line. At the same time as this transmission of the voice information, the discrimination means 141 discriminates the communication mode of the communication which is made between the party who is connected to the other end of the line. The service providing means 151 provides a service which is dependent on the discrimination result obtained in the discrimination means 141.

Therefore, the present invention is characterized by the simultaneous operation of the voice information transmission means 131 and the discrimination means 141.

Next, a description will be given of an embodiment of the multi-media communication system according to the present invention, by referring to FIG.4. In FIG.4, the multi-media communication system generally comprises a line processing part 210, a main controller 281 which runs on application programs 283, and a hard disk drive unit 291. The line processing part 210 comprises a controller 211 which runs on line control programs 213, a random access memory (RAM) 221, a line connection part 231, an automatic/manual detector 241, a facsimile controller 251, a voice coder/decoder 261, and a push button signal receiver (hereinafter simply referred to as a PB receiver) 271.

The controller 211 and the line connection part 231 correspond to the line connection means 111 shown in FIG.3. The RAM 221 corresponds to the storage means 121. The controller 211 and the voice coder/decoder 261 correspond to the voice information transmission means 131. The controller 211 and the automatic/manual detector 241 correspond to the discrimination means 141. The controller 211, the facsimile controller 251, the voice coder/decoder 261, the PB receiver 271, the main controller 281 and the hard disk drive unit 291 correspond to the service providing means 151.

The system shown in FIG.4 corresponds to the multi-media service center 511 shown in FIG.1. In FIG.4, the main controller 281 controls the entire operation of the center 511. Various control operations are carried out by the main controller 281 by executing the application programs 283.

The line processing part 210 controls the signal transmission and reception between the center 511 and the public telephone network 521. The hard disk drive unit 291 drives a hard disk (not shown) which stores the voice guidance information which is intended to give operating instructions to the operator of the telephone set 531.

The controller 211 controls the entire operation of the line processing part 210. Various control operations are carried out by the controller 211 by executing the line control programs 213. The RAM 221 constitutes a semiconductor memory for storing a portion of the voice guidance information, and the stored guidance information can be read out from the RAM 221 at a high speed. The line connection part 231 makes a physical connection to the line.

The automatic/manual detector 241 detects a calling signal CNG and a called station identification signal CED which are in conformance with the standard facsimile procedure so as to discriminate whether the party on the other end of the line is the facsimile machine 533 or the telephone set 531. The facsimile controller 251 controls the transmission and reception of the facsimile image information in conformance with the facsimile communication protocol. The voice coder/decoder 261 modulates the voice guidance information (digital data) which is received and transmits an analog voice signal on the line via the line connection part 231.

The controller 211 is connected to various parts of the line processing part 210. The line connection part 231 is connected to automatic/manual detector 241, the facsimile controller 251, the voice coder/decoder 261, the PB receiver 271, and the line. The RAM 221 is connected to the voice coder/decoder 261.

Furthermore, the main controller 281 is connected to the controller 211 and the hard disk drive unit 291.

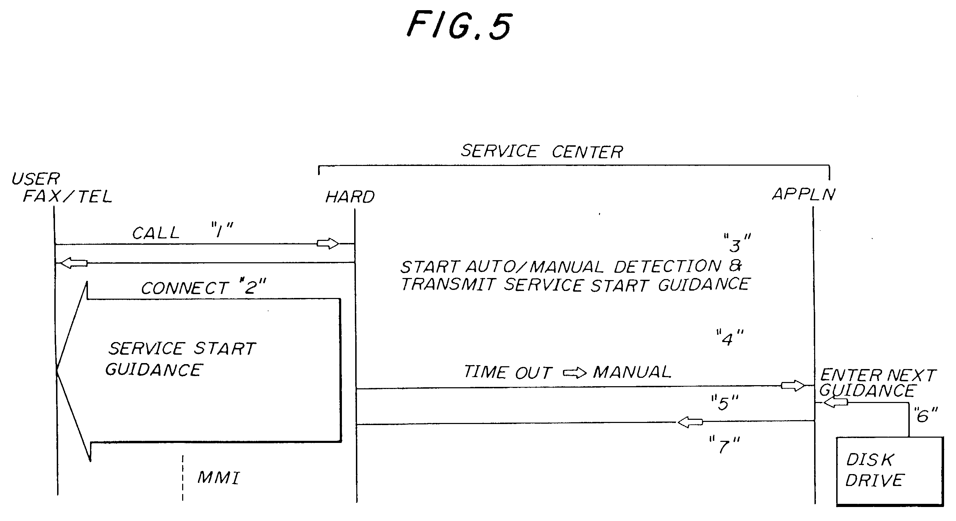

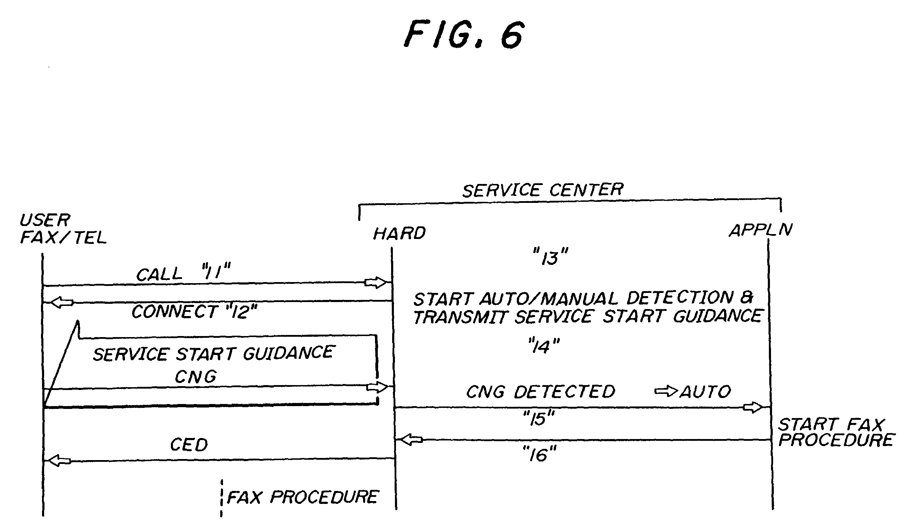

Next, a description will be given of the operation procedure of this embodiment by referring to the time charts of FIGS.5 and 6. In FIGS.5 and 6, "USER FAX/TEL" indicates the user's facsimile machine 533 or the telephone set 531, "HARD" indicates to a hardware processing of the center 511, and "APPLN" indicates a software processing of the center 511. "HARD" corresponds to the process carried out by the line connection part 231 which functions as an interface to the lines and the various signal transmission and detection processes carried out by the automatic/manual detector 241, the facsimile controller 251, the voice coder/decoder 261 and the PB receiver 271. "APPLN" corresponds to the processes carried out by the controller 211 and the main controller 281. In addition, the numbers "1" through "7" and "11" through "16" shown in FIGS.5 and 6 correspond to the operation procedure numbers which will be described hereunder.

For the sake of convenience, it is assumed that a service start guidance (voice guidance) which is 10 seconds long is stored in the RAM 221 for being transmitted to the telephone set 531 after the line connection is made. For example, when coding the voice at 32 kbps, the RAM 221 requires a memory capacity in the order of 40 kbytes.

A description will be made for a first case where the party on the other end of the line is the telephone set 531 and a second case where the party on the other end of the line is the facsimile machine 533. In the first case, the caller makes a manual call out from the telephone set 531. On the other hand, in the second case, the caller makes an automatic call out from the facsimile machine 533.

The first case will be described first.
"1": The line connection part 231 detects the call out from the telephone set 531 and informs the result of the detection to the controller 211.
"2": The controller 211 instructs the line connection part 231 to accept the call, and a line is connected between the center 511 and the telephone set 531.
"3": After the line is connected, the controller 211 starts the automatic/manual detector 241. The automatic/manual detector 241 has an internal timer and supervises the existence of the calling signal CNG which is received from the caller within a predetermined time which is three seconds, for example.
"4": Simultaneously as the starting of the automatic/manual detector 241, the controller 211 supplies a transmission instruction to the voice coder/decoder 261 so as to transmit the service start guidance on the line. The voice coder/decoder 261 reads out the voice data which is related to the service start guidance from the RAM 221 in response to the transmission instruction, codes the read out voice data and supplies the coded voice data (service start guidance) on the line. Because the voice data can be read out from the RAM 221 at a high speed, the operator of the telephone set 531 can listen to the service start guidance immediately after the line is connected.
"5": When the automatic/manual detector 241 does not detect the calling signal CNG within the predetermined time, the controller 211 is informed of this detection result from the automatic/manual detector 241. Based on the information which is received from the automatic/manual detector 241, the controller 211 recognizes that the caller is not the facsimile machine 533 but is the telephone set 531.
"6": Based on the recognition result in the controller 211, the main controller 281 reads out the voice data from the hard disk by controlling the disk drive unit 291 so as to transmit the voice guidance to the telephone set 531 in succession to the service start guidance.
"7": The controller 211 supplies the voice data which is read out by the main controller 281 to the voice coder/decoder 261. After transmitting the service start guidance, the voice coder/decoder 261 codes the voice data which is received from the main controller 281 via the controller 211 and transmits the coded voice data (voice guidance) on the line.

Thereafter, data transmission and reception are made between the center 511 and the telephone set 531 to provide the desired service to the operator of the telephone set 531. For example, the operator pushes push buttons of the telephone set 531 in response to the voice guidance which is received from the center 511, and the operated push buttons are detected by the PB receiver 271. The main controller 281 transmits a predetermined voice information to the telephone set 531 based on the result of the detection made in the PB receiver 271.

The second case will be described next.
"11": The line connection part 231 detects the call out from the facsimile machine 533 and informs the result of the detection to the controller 211.
"12": The controller 211 instructs the line connection part 231 to accept the call, and a line is connected between the center 511 and the facsimile machine 533.
"13": After the line is connected, the controller 211 starts the automatic/manual detector 241.
"14": Simultaneously as the starting of the automatic/manual detector 241, the controller 211 supplies a transmission instruction to the voice coder/decoder 261 so as to transmit the service start guidance on the line.
"15": When the automatic/manual detector 241 detects the calling signal CNG within the predetermined time, the controller 211 is informed of this detection result from the automatic/manual detector 241. Based on the information which is received from the automatic/manual detector 241, the controller 211 recognizes that the caller is the facsimile machine 533. In addition, the controller 211 informs the main controller 281 of this recognition result.
"16": Thereafter, a facsimile communication is made between the center 511 and the facsimile machine 533 to provide the desired service to the operator of the facsimile machine 533. For example, the facsimile controller 251 supplies the called station identification signal CED to the facsimile machine 533 and transmits the facsimile image information in conformance with the facsimile communication protocol.

When the other party on the other end of the line is recognized as the facsimile machine 533 in the operation procedure number "15", there is no need to transmit the service start guidance. For this reason, the controller 211 supplies a transmission stop instruction to the voice coder/decoder 261.

Therefore, according to this embodiment, the automatic/manual detector 241 is started after the line connection is made so as to detect the calling signal CNG from the caller and discriminate whether the caller is the telephone set 531 or the facsimile machine 533.

In addition, the service start guidance is transmitted to the caller at the same time as the above described discrimination of the caller. More particularly, the voice data is read out from the RAM 221 and is transmitted to the caller via the voice coder/decoder 261. Generally, full duplex lines are used in the telephone networks and line networks, and it is thus possible to simultaneously discriminate the caller and transmit the service start guidance.

Accordingly, when the caller is the telephone set 531, the operator of the telephone set 531 can listen to the service start guidance immediately after the line is connected. On the other hand, when the caller is the facsimile machine 533, the facsimile machine 533 can simply neglect the service start guidance which is received from the center 511 and carry out the normal facsimile operation in conformance with the facsimile communication protocol.

Conventionally, the accounting is made even during the no-sound state. For this reason, the elimination of the no-sound state immediately after the line connection is also advantageous in that the charge on the call from the telephone set 531 can be reduced compared to the conventional system.

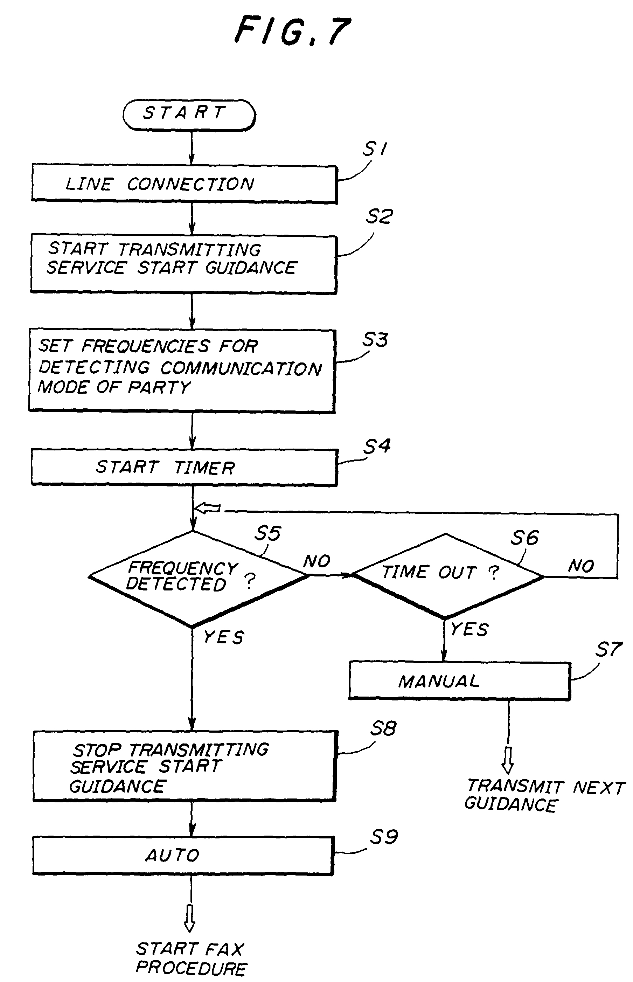

FIG.7 is a flow chart showing the operation of the controller 211. In FIG.7, a step S1 connects the line in response to the call from the caller by controlling the line connection part 231. A step S2 starts to transmit the service start guidance by controlling the voice coder/decoder 261. A step S3 sets frequencies for detecting the communication mode of the caller. For example, a frequency of 2100 Hz is set for detecting the calling signal CNG, and a frequency of 1100 Hz is set for detecting the called station identification signal CED. A step S4 starts the internal timer of the automatic/manual detector 241 for detecting the communication mode of the caller.

A step S5 discriminates whether or not one of the set frequencies is detected. When the discrimination result in the step S5 is NO, a step S6 discriminates whether or not the predetermined time set in the internal timer of the automatic/manual detector 241 has elapsed. The process returns to the step S5 when the discrimination result in the step S6 is NO. On the other hand, when the discrimination result in the step S6 is YES, a step S7 detects that the communication mode is the manual calling mode, that is, the caller is the telephone set 531, and controls the voice coder/-decoder 261 so as to transmit the voice guidance in succession to the service start guidance.

On the other hand, when the discrimination result in the step S5 is YES, a step S8 detects that the communication mode is the automatic calling mode, that is, the caller is the facsimile machine 533, and controls the voice coder/decoder 261 so as to stop the transmission of the service start guidance and start the facsimile communication procedure. Of course, it is not essential to stop the transmission of the service start guidance and it is possible to start the facsimile communication procedure after the service start guidance ends.

In the embodiment described heretofore, a discrimination is made after the line is connected so as to determine whether the party on the other end of the line is the telephone set 531 or the facsimile machine 533. However, the party on the other end of the line is not limited to the telephone set 531 and the facsimile machine 533. For example, the party may be a personal computer. In such a case, an automatic calling procedure of the personal computer is determined in advance so that the automatic/manual detector 241 can detect this automatic calling procedure of the personal computer.

Reference signs in the claims are intended for better understanding and shall not limit the scope.

## Claims

1. A multi-media information service center (511) for coupling to a telephone set (531) and a communication unit (533) via a line network (521), said communication unit being other than a telephone set, said multi-media information service center comprising line connection means (111) for coupling to the line network for connecting the multi-media information service center to the line network in response to a call which is received from a party which is coupled via the line network to the multi-media information service center, storage means (121) for storing a voice information, voice information transmission means (131) for coupling to the line network, said line connection means and said storage means being for reading the voice information from said storage means and transmitting the voice information to the predetermined line, discrimination means (141)for coupling to the line network for discriminating a communication mode of the party, and service providing means (151) for coupling to the line network and said discrimination means for providing to the party a service which is dependent on a discrimination result in said discrimination means, characterized in that said line connection means (111) has a single line input for receiving calls on a common predetermined line both from said telephone set (531) and from said communication unit (533) said voice information transmission means (131) and said discrimination means (141) are arranged to operate simultaneously after said line connection means (111) connects the multi-media information service center (511) to the predetermined line in use of said multi-media information centre, said storage means (121) comprises a first storage means (291) for storing a voice guidance and a second storage means (221) of faster access speed than said first storage means (291) for storing a service start guidance, and said voice information transmission means (131) is arranged (i) to read the stored service start guidance from the second storage means (221) simultaneously with the start of discrimination by said discrimination means and to transmit said service start guidance on said predetermined line, (ii) to read the stored voice guidance from the first storage means (291) and to transmit said voice guidance on said predetermined line in succession to said service start guidance, when said discrimination means (141) discriminates the communication mode of the party as a manual calling mode in which a manual call is made from the party which is the telephone set (531), (iii) to terminate the service start guidance when the discrimination means (141) detects a calling signal (CNG) from said communication unit (533) and (iv) to accordingly supply a called station identification signal (CED) to said communication unit (533) to initiate communication thereof with said multi-media information centre.

2. The multi-media information service center as claimed in claim 1, characterized in that said voice information transmission means (131) is arranged to transmit the service start guidance immediately after said line connection means (111) connects the multi-media information service center (511) to the predetermined line.

3. The multi-media information service center as claimed in claim 1 or 2, characterized in that said second storage means (221) comprises a semiconductor memory (221) for storing the service start guidance.

4. The multi-media information service center as claimed in claim 1, 2 or 3, characterized in that said first storage means (291) comprises a disk unit (291) for storing the voice guidance.

5. The multi-media information service center as claimed in any preceding claim, characterized in that said discrimination means (141) is arranged to discriminate the communication mode as a manual calling mode in which a manual call is made from the party which is the telephone set (531) when a signal in conformance with a predetermined communication procedure is not detected within a predetermined time from a time when said line connection means (111) connects the multi-media information service center (511) to the predetermined line, and is arranged to discriminate the communication mode as an automatic calling mode in which an automatic call is made from the party which is the communication unit (533) when the signal in conformance with the predetermined communication procedure is detected within the predetermined time.

6. The multi-media information service center as claimed in claim 5, characterized in that the communication unit (533) is a facsimile machine (533), and the predetermined communication procedure is a facsimile communication procedure.

7. The multi-media information service centre as claimed in any preceding claim and included in a multi-media communication system comprising, in addition to that multi-media information service centre, a telephone set (531), a communication unit (533) which is other than a telephone set, and a line network (521), wherein said line connection means (111), said information transmission means (131), said discrimination means (141) and said service providing means (151) of the multi-media information service centre (511) are coupled to said line network (521).

## Patentansprüche

1. Multimedia-Informationsdienstzentrum (511) zur Kopplung mit einem Telefongerät (531) und einer Kommunikationseinheit (533) über ein Leitungsnetz (521), wobei die Kommunikationseinheit etwas anderes als ein Telfongerät ist, wobei das Multimedia-Informationsdienstzentrum umfaßt: Eine Leitungsverbindungseinrichtung (111) zur Kopplung mit dem Leitungsnetz zum Verbinden des Multimedia-Informationsdienstzentrums mit dem Leitungsnetz im Ansprechen auf einen Anruf, der von einer Partei empfangen wird, die über das Leitungsnetz mit dem Multimedia-Informationsdienstzentrum gekoppelt ist, eine Speichereinrichtung (121) zum Speichern einer Sprachinformation, eine Sprachinformations-Übertragungseinrichtung (131) zur Kopplung mit dem Leitungsnetz, wobei die Leitungsverbindungseinrichtung und die Speichereinrichtung zum Lesen der Sprachinformation aus der Speichereinrichtung und zum Übertragen der Sprachinformation an die vorgegebene Leitung vorgesehen sind, eine Bestimmungseinrichtung (141) zur Kopplung mit dem Leitungsnetz zum Bestimmen eines Kommunikationsmodus der Partei, und eine DienstBereitstellungseinrichtung (151) zur Kopplung mit dem Leitungsnetz und der Bestimmungseinrichtung, um an der Partei einen Dienst bereitzustellen, der von einem Bestimmungsergebnis in der Bestimmungseinrichtung abhängt,
dadurch **gekennzeichnet,** daß
die Leitungsverbindungseinrichtung (111) einen einzigen Leitungseingang zum Empfangen von Anrufen auf einer gemeinsamen vorgegebenen Leitung sowohl von dem Telefongerät (531) als auch von der Kommunikationseinheit (533) aufweist, die Sprachinformations-Übertragungseinrichtung (131) und die Bestimmungseinrichtung (141) angeordnet sind, um gleichzeitig zu arbeiten, nachdem die Leitungsverbindungseinrichtung (111) das Multimedia-Informationsdienstzentrum (511) mit der vorgegebenen Leitung bei der Verwendung des Multimedia-Informationszentrums verbindet, die Speichereinrichtung (121) eine erste Speichereinrichtung (291) zum Speichern einer Sprachführung und eine zweite Speichereinrichtung (221) mit einer schnelleren Zugriffsgeschwindigkeit als die erste Speichereinrichtung (291) zum Speichern einer Dienststartführung umfaßt, und die Sprachinformations-Übertragungseinrichtung (131) angeordnet ist, um (i) die gespeicherte Dienststartführung aus der zweiten Speichereinrichtung (221) gleichzeitig mit dem Start einer Bestimmung durch die Bestimmungseinrichtung zu lesen und die Dienststartführung auf die vorgegebene Leitung zu übertragen, um (ii) die gespeicherte Sprachführung von der ersten Speichereinrichtung (291) zu lesen und die Sprachführung auf die vorgegebene Leitung nach der Dienststartführung zu übertragen, wenn die Bestimmungseinrichtung (141) den Kommunikatiosmodus der Partei als einen manuellen Anrufmodus bestimmt, bei dem ein manueller Anruf von der Partei durchgeführt wird, die das Telefongerät (531) ist, um (iii) die Dienststartführung zu beenden, wenn die Bestimmungseinrichtung (141) ein Anrufsignal (CNG) von der Kommunikationseinheit (533) erfaßt, und um (iv) dementsprechend ein Identifikationssignal (CED) der angerufenen Station an die Kommunikationseinheit (533) zu liefern, um eine Kommunikation davon mit dem Multimedia-Informationszentrum zu initiieren.

2. Multimedia-Informationsdienstzentrum nach Anspruch 1, dadurch gekennzeichnet, daß die Sprachinformations-Übertragungseinrichtung (131) angeordnet ist, um die Dienststartführung zu übertragen, unmittelbar, nachdem die Leitungsverbindungseinrichtung (111) das Multimedia-Informationsdienstzentrum (511) mit der vorgegebenen Leitung verbindet.

3. Multimedia-Informationsdienstzentrum nach Anspruch 1 oder 2, dadurch gekennzeichnet, daß die zweite Speichereinrichtung (221) einen Halbleiterspeicher (221) zum Speichern der Dienststartführung umfaßt.

4. Multimedia-Informationsdienstzentrum nach Anspruch 1, 2 oder 3, dadurch gekennzeichnet, daß die erste Speichereinrichtung (291) eine Disketteneinheit (291) zum Speichern der Sprachführung umfaßt.

5. Multimedia-Informationsdienstzentrum nach einem der vorangehenden Ansprüche, dadurch gekennzeichnet, daß die Bestimmungseinrichtung (141) angeordnet ist, um den Kommunikationsmodus als den manuellen Anrufmodus zu bestimmen, bei dem ein manueller Anruf von der Partei durchgeführt wird, die das Telefongerät (531) ist, wenn ein Signal in Übereinstimmung mit einer vorgegebenen Kommunikationsprozedur nicht innerhalb einer vorgegebenen Zeit von einer Zeit erfaßt wird, zu der die Leitungsverbindungseinrichtung (111) das Multimedia-Informationsdienstzentrums (511) mit der vorgegebenen Leitung verbindet, und angeordnet ist, um den Kommunikationsmodus als den automatischen Anrufmodus zu bestimmen, bei dem ein automatischer Anruf von der Partei durchgeführt wird, die die Kommunikationseinheit (533) ist, wenn das Signal in Übereinstimmung mit der vorgegebenen Kommunikationsprozedur innerhalb der vorgegebenen Zeit erfaßt wird.

6. Multimedia-Informationsdienstzentrum nach Anspruch 5, dadurch gekennzeichnet, daß die Kommunikationseinheit (533) eine Faksimilemaschine (533) ist und die vorgegebene Kommuikationsprozedur eine Faksimile-Kommunikationsprozedur ist.

7. Multimedia-Informationsdienstzentrum nach irgendeinem vorangehenden Anspruch und in einem Multimedia-Kommunikationssystem eingebaut, umfassend, zusätzlich zu dem Multimedia-Informationsdienstzentrum, ein Telefongerät (531), eine Kommunikationseinheit (533), die etwas anderes als ein Telefongerät ist, und ein Leitungsnetz (521), wobei die Leitungsverbindungseinrichtung (111) die Informations-Übertragungseinrichtung (131), die Bestimmungseinrichtung (141) und die Dienstbereitstellungseinrichtung (151) des Multimedia-Informationsdienstzentrums (511) mit dem Leitungsnetz (521) gekoppelt sind.

## Revendications

1. Centre de service d'information multimédia (511) destiné à être couplé à un appareil téléphonique (531) et à une unité de communication (533) par l'intermédiaire d'un réseau par ligne (521), ladite unité de communication étant autre qu'un appareil téléphonique, ledit centre de service d'information multimédia comportant des moyens (111) de connexion à la ligne, pour le couplage au réseau par ligne en vue de relier le centre de service d'information multimédia au réseau par ligne en réponse à un appel qui est reçu d'un correspondant couplé au centre de service d'information multimédia par l'intermédiaire du réseau par ligne, des moyens de mémoire (121) pour conserver des informations vocales, des moyens (131) de transmission d'informations vocales pour couplage au réseau par ligne, lesdits moyens de connexion à la ligne et lesdits moyens de mémoire servant à lire les informations vocales dans lesdits moyens de mémoire et à transmettre les informations vocales sur la ligne prédéterminée, des moyens de discrimination (141) pour couplage au réseau par ligne, en vue de déterminer un mode de communication du correspondant, et des moyens (151) de fourniture de service, pour couplage au réseau par ligne et auxdits moyens de discrimination, pour fournir au correspondant un service qui dépend du résultat d'une discrimination dans lesdits moyens de discrimination, caractérisé en ce que lesdits moyens de connexion à la ligne (111) sont dotés d'une simple entrée de ligne pour recevoir des appels sur une ligne commune prédéterminée, à la fois dudit appareil téléphonique (531) et de ladite unité de communication (533), lesdits moyens (131) de transmission d'informations vocales et lesdits moyens de discrimination (141) sont agencés de manière à fonctionner simultanément une fois que lesdits moyens (111) de connexion à la ligne ont connecté le centre (511) de service d'information multimédia à la ligne prédéterminée lorsque ledit centre d'information multimédia est en utilisation, lesdits moyens de mémoire (121) comportent des premiers moyens de mémoire (291) pour conserver une guidance vocale et des deuxièmes moyens de mémoire (221) dont la vitesse d'accès est plus rapide que celle desdits premiers moyens de mémoire (291), pour conserver une guidance initiale de service, et lesdits moyens (131) de transmission d'informations vocales sont agencés de manière à (i) lire la guidance initiale de service mémorisée dans les deuxièmes moyens de mémoire (221) simultanément avec le début de la discrimination par lesdits moyens de discrimination et transmettre ladite guidance initiale de service sur ladite ligne prédéterminée, (ii) lire la guidance vocale mémorisée dans lesdits premiers moyens de mémoire (291) et transmettre ladite guidance vocale sur ladite ligne prédéterminée après ladite guidance initiale de service, lorsque lesdits moyens de discrimination (141) ont déterminé que le mode de communication du correspondant est un mode d'appel manuel, dans lequel un appel manuel est lancé par le correspondant qui est l'appareil téléphonique (531), (iii) terminer la guidance initiale de service lorsque les moyens de discrimination (141) ont détecté un signal d'appel (CNG) provenant de ladite unité de communication (533), et (iv) délivrer en correspondance un signal d'identification de poste appelé (CED) à ladite unité de communication (533) pour établir la communication entre celle-ci et ledit centre d'information multimédia.

2. Centre de service d'information multimédia selon la revendication 1, caractérisé en ce que lesdits moyens (131) de transmission d'informations vocales sont agencés pour transmettre la guidance initiale de service immédiatement après que lesdits moyens (111) de connexion à la ligne ont connecté le centre (511) de service d'information multimédia à la ligne prédéterminée.

3. Centre de service d'information multimédia selon la revendication 1 ou 2, caractérisé en ce que lesdits deuxièmes moyens de mémoire (221) comportent une mémoire (221) à semi-conducteur pour conserver la guidance initiale de service.

4. Centre de service d'information multimédia selon la revendication 1, 2 ou 3, caractérisé en ce que lesdits premiers moyens de mémoire (291) comportent une unité à disque (291) pour conserver la guidance vocale.

5. Centre de service d'information multimédia selon l'une quelconque des revendications précédentes, caractérisé en ce que lesdits moyens de discrimination (141) sont agencés pour détecter que le mode de communication est un mode d'appel manuel, dans lequel un appel manuel est lancé par le correspondant qui est l'appareil téléphonique (531), lorsqu'un signal conforme à une procédure de communication prédéterminée n'est pas détecté à l'intérieur d'une durée prédéterminée commençant à un instant où lesdits moyens (111) de connexion à la ligne connectent le centre (511) de service d'information multimédia à la ligne prédéterminée, et sont agencés pour déterminer que le mode de communication est un mode d'appel automatique, dans lequel un appel automatique est lancé du correspondant qui est l'unité de communication (533) lorsque le signal en accord avec la procédure de communication prédéterminée est détecté à l'intérieur de la durée prédéterminée.

6. Centre de service d'information multimédia selon la revendication 5, caractérisé en ce que l'unité de communication (533) est une machine à fac-similé (533), et la procédure de communication prédéterminée est une procédure de communication par fac-similé.

7. Centre de service d'information multimédia selon l'une quelconque des revendications précédentes et compris dans un système de communication multimédia comportant, en plus de ce centre de service d'information multimédia, un appareil téléphonique (531), une unité de communication (533) qui est autre qu'un appareil téléphonique, et un réseau par ligne (521), dans lequel lesdits moyens (111) de connexion à la ligne, lesdits moyens (131) de transmission d'informations, lesdits moyens (141) de discrimination et lesdits moyens (151) de fourniture de services du centre (511) de service d'information multimédia sont couplés audit réseau par ligne (521).
